# EUROPEAN PATENT SPECIFICATION

(11) **EP 4 259 358 B1**
(45) Date of publication and mention of the grant of the patent: **28.10.2026**
(21) Application number: 21907612.2
(22) Date of filing: 14.12.2021
(51) Int. Cl.: B21K 5/04, B28B 1/14, B28B 7/34, B29C 33/52, B29C 39/10, B29C 39/36, B29C 45/14, B29C 45/44, B29C 67/00, C04B 35/44, B29K 21/00, B29K 23/00, B29K 27/12, B29K 67/00, B29K 69/00, B29K 75/00, B29K 83/00, B29K 105/04

(54) **QUICK DISSOLVING CAVITY FORMING STRUCTURE FOR INJECTION MOLDED STRUCTURES**
STRUKTUR ZUR SCHNELLEN HOHLRAUMBILDUNG FÜR SPRITZGEGOSSENE STRUKTUREN
STRUCTURE DE FORMATION DE CAVITÉ À DISSOLUTION RAPIDE POUR STRUCTURES MOULÉES PAR INJECTION

(30) Priority: 14.12.2020 US 202063125032 P
(43) Date of publication of application: 18.10.2023
(73) Proprietor: Sartorius Stedim North America Inc., Bohemia, NY 11716 (US)
(72) Inventor: ZUMBRUM, Michael, New Oxford, PA 17350 (US); KIMMICK, William, Mechanicsburg, PA 17055 (US)
(74) Representative: Novagraaf International SA
(86) International application number: PCT/US2021/063258
(87) International publication number: WO 2022/132731

(56) References cited:
- WO-A1-2014/131388
- WO-A1-2020/018815
- US-A1- 2002 033 221
- US-A1- 2014 339 745
- US-A1- 2022 111 563
- US-B1- 6 350 337
- US-B2- 10 835 249
- US-B2- 10 835 249

## Description

### Cross-Reference to Related Applications

This application claims the benefit of, and priority to, U.S. Provisional Patent Application Serial No. 63/125,032, filed December 14, 2020.

### Background

### 1. Technical Field

The present disclosure relates to injection molding and, more specifically, to injection molding structures with internal cavities. In addition, methods for injection molding internal cavities are disclosed.

### 2. Discussion of Related Art

Additive manufacturing has become an important tool for product development and for production of products. Additive manufacturing has been limited by the low number of materials that are compatible with the additive manufacturing technologies.

Some manufactures have begun looking for ways to combine additive manufacturing with casting and molding techniques. For example, casts or molds can be produced using additive manufacturing and be used to mold products formed of materials not compatible with additive manufacturing techniques. In some applications, additive manufacturing has been used to produce inserts for molds or casts to replace aluminum or steel inserts. The additive manufactured inserts may allow for a reduced lead time for modifying the inserts to incorporate design changes.

In some applications, the additive manufactured molds, casts, or inserts are durable and capable of being used for multiple molding or casting cycles. Such durable molds, casts, or inserts can be used to produce a high number of identical components and allows for high speed manufacturing and allows for a wide selection of available thermoplastic materials.

In other applications, the additive manufactured molds, casts, or inserts are sacrificial or single use such that the molds, casts, or inserts are disintegrated after molding or casting a single product. Such molds, casts, or inserts may allow for the manufacturing of complex objects with geometries that are difficult or impossible to be molded with a durable mold. The disintegration of such molds, casts, or inserts can take hours or days. WO2014131388A1 discloses a dissolvable core, coated with a skin layer, however the core and the skin layer are not formed monolithically with each other.

### Summary

The present invention is defined by the method of claim 1. Claim 10 addresses a related product. Further embodiments are set out in the dependent claims. This disclosure relates generally to molds, casts, and inserts that include latticed cores to reduce a time required to disintegrate the mold, cast, or insert after use. The molds, casts, and inserts may be manufactured with additive manufacturing techniques to provide internal flow paths to allow a disintegrating fluid to flow therethrough. The latticed cores or internal flow paths may increase a surface area in contact with a disintegrating fluid to reduce the time required to disintegrate the model, cast, or insert.

According to an embodiment of the present disclosure, a method of molding an article includes positioning a dissolvable insert within a mold, filling the mold with material to form an article within the mold and about the dissolvable insert, and at least partially dissolving the dissolvable insert from within the article. The dissolvable insert forms internal features of the article and includes a porous core.

In embodiments, at least partially dissolving the dissolvable insert from within the article includes placing the article, including the dissolvable insert, in a water bath. At least partially dissolving the dissolvable insert from within the article may include flowing fluid through the porous core of the dissolvable insert. Dissolving the porous core may cause an outer surface of the dissolvable insert to collapse or disintegrate. Flowing fluid through the porous core may include flowing fluid through channels formed through the dissolvable insert.

In some embodiments, the method may include forming the dissolvable insert via additive manufacturing techniques. Forming the dissolvable insert may include forming the porous core having a lattice structure to support an outer surface of the dissolvable insert. The outer surface may form internal features of the article.

In certain embodiments, the method may include forming the dissolvable insert of a dissolvable resin. The dissolvable resin may include polyacrylic acid (PAA), polylactic acid (PLA), polyethylene glycol (PEG), acrylic blends, or combinations thereof.

In particular embodiments, the method includes cooling the article within the mold by flowing cooling media through a flow channel defined through the dissolvable insert. The cooling media may dissolve the dissolvable insert and cool the article about the dissolvable insert.

In embodiments, filling the mold with material includes injecting the material into the mold. Injecting the material into the mold may include injecting the material at an elevated temperature and/or pressure such that the material fills any voids within the mold and between the mold and the insert.

In some embodiments, filling the mold with material includes the formed article being a fluid handling component having a body and the at least one internal feature formed by the dissolvable insert defined within the body.

In certain embodiments, filling the mold with material includes filling the mold with a thermoplastic polymer or a thermoset polymer. Filling the mold may include filling the mold with polyolefin, thermoplastic elastomer (TPE), polycarbonate (PC), polyethylene terephthalate (PET), silicones, polyurethanes, polyureas, fluoroelastomers, or combinations thereof.

In another embodiment of the present disclosure, a dissolvable insert for forming internal features of a molded article includes an outer surface and a porous core. The outer surface is configured to form an internal feature of the molded article. The porous core is within the outer surface and is configured to support the outer surface such that the outer surface is rigid. The outer surface and the porous core are formed of a dissolvable resin that is configured to be dissolved after an article is formed about the outer surface.

In embodiments, the outer surface is a barrier to prevent material flowed through a mold from entering the porous core. The porous core may include a lattice structure. The lattice structure may include an open cell structure that is configured to provide structural support for the outer surface. The lattice structure may form an open-mesh frame that defines a plurality of voids.

In some embodiments, the dissolvable insert includes a flow channel that is defined through the porous core. The flow channel may be configured to allow fluid to flow through the porous core. The dissolvable resin forming the dissolvable insert may include polyacrylic acid (PAA), polylactic acid (PLA), polyethylene glycol (PEG), acrylic blends, or combinations thereof.

In another embodiment of the present disclosure, a method of molding an article includes positioning a dissolvable insert within a mold, filling the mold with material to form an article within the mold and about the dissolvable insert and at least partially dissolving the dissolvable insert from within the article. The dissolvable insert including a porous core within an outer surface or skin that forms internal features of the article.

In embodiments, at least partially dissolving the dissolvable insert from within the article includes placing the article, including the dissolvable insert, in a water bath. Additionally or alternatively, at least partially dissolving the dissolvable insert from within the article may include flowing fluid through the porous core of the dissolvable insert. Flowing fluid through the porous core may include flowing fluid through channels formed through the dissolvable insert.

In some embodiments, the method may include forming the dissolvable insert via additive manufacturing techniques. Forming the dissolvable insert may include forming the porous core such that the porous core has a lattice structure to support an outer surface of the dissolvable insert. The outer surface may form internal features of the article.

In certain embodiments, the method includes forming the dissolvable insert of a dissolvable resin. Forming the dissolvable insert of a dissolvable resin may include the dissolvable resin including polyacrylic acid (PAA), polylactic acid (PLA), polyethylene glycol (PEG), acrylic blends, or combinations thereof.

In particular embodiments, the method includes cooling the article within the mold by flowing cooling media through a flow channel defined through the dissolvable insert. Flowing fluid through the flow channel may dissolve the dissolvable insert and cool the article about the dissolvable insert.

In embodiments, filling the mold with material includes injecting the material into the mold. Filling the mold with material may include the formed article being a fluid handling component having a body and at least one internal feature formed by the dissolvable insert within the body. Filling the mold with material may include filling the mold with a thermoplastic polymer or a thermoset polymer. The material may be filled with polyolefin, thermoplastic elastomer (TPE), polycarbonate (PC), polyethylene terephthalate (PET), silicones, polyurethanes, polyureas, fluoroelastomers, or combinations thereof.

In another embodiment of the present disclosure, a dissolvable insert for forming internal features of a molded article includes an outer surface and a porous core. The outer surface is configured to form an internal feature of a molded article. The porous core within the outer surface is configured to support the outer surface such that the outer surface is rigid. The outer surface and the porous core are formed of a dissolvable resin that is configured to be dissolved after the molded article is formed about the outer surface.

In embodiments, the outer surface is a barrier to prevent material from entering the porous core. The porous core may include a lattice structure. The lattice structure may include an open cell structure configured to provide structural support for the outer surface. The lattice structure may form an open-mesh frame that defines a plurality of voids. The dissolvable insert may include a flow channel defined through the porous core that is configured to allow fluid to flow through the porous core. The flow channel may direct fluid to one or more sections defined within the insert. Directing fluid to one or more sections defined within the insert may reduce a time required to dissolve the insert. The dissolvable resin may include polyacrylic acid (PAA), polylactic acid (PLA), polyethylene glycol (PEG), acrylic blends, or combinations thereof.

Using the dissolvable insert may allow an article to be monolithically formed with complex internal features. Monolithically forming an article may increase strength of the finished article and/or may allow for an article to be made without seams or mating lines between portions of the article. Using the dissolvable insert may allow for internal features to be defined within a molded article that are not possible without the use of a dissolvable insert. For example, a dissolvable insert may form an internal feature that is not accessible with a traditional mandrel that must be removed through an opening of the finished molded article. A dissolvable insert with a porous core may reduce an amount of time required to dissolve an insert compared to an insert having a solid core.

Further, to the extent consistent, any of the embodiments or aspects described herein may be used in conjunction with any or all of the other embodiments or aspects described herein.

### Brief Description of the Drawings

Various aspects of the present disclosure are described hereinbelow with reference to the drawings, which are incorporated in and constitute a part of this specification, wherein:
FIG. 1 is a flow chart of a method of forming an article provided in accordance with an embodiment of the present disclosure;
FIG. 2 is a side view of a portion of a mold provided in accordance with an embodiment of the present disclosure;
FIG. 3 is a side view of the mold of FIG. 2 with an insert received within the mold;
FIG. 4 is a perspective view of the mold of FIG. 2 with a product molded over the insert of FIG. 4;
FIG. 5 is a perspective view of the product of FIG. 4 with the insert removed;
FIG. 6 is a cutaway, perspective view of the product of FIG. 5 showing internal ribs formed during the molding process;
FIG. 7 is a perspective view of a mold insert provided in accordance with an embodiment of the present disclosure;
FIG. 8 is a cutaway, perspective view of the mold insert of FIG. 7;
FIG. 9 is a perspective view of a fluid handling component provided in accordance with an embodiment of the present disclosure;
FIG. 10 is a perspective view of an insert provided in accordance with an embodiment of the present disclosure for forming internal features of the fluid handling component of FIG. 9;
FIG. 11 is a perspective view of a mold assembly provided in accordance with an embodiment of the present disclosure for forming the fluid handling component of FIG. 9 with the insert of FIG. 10; and
FIG. 12 is a cross-sectional view of the mold assembly of FIG. 11 taken along the section line 12-12 of FIG. 11.

### Detailed Description

The invention is set out in the appended set of claims. The present disclosure will now be described more fully hereinafter with reference to example embodiments thereof with reference to the drawings in which like reference numerals designate identical or corresponding elements in each of the several views. These example embodiments are described so that this disclosure will be thorough and complete, and will fully convey the scope of the disclosure to those skilled in the art. Features from one embodiment or aspect can be combined with features from any other embodiment or aspect in any appropriate combination. For example, any individual or collective features of method aspects or embodiments can be applied to apparatus, product, or component aspects or embodiments and vice versa. The disclosure may be embodied in many different forms and should not be construed as limited to the embodiments set forth herein; rather, these embodiments are provided so that this disclosure will satisfy applicable legal requirements. As used in the specification and the appended claims, the singular forms "a," "an," "the," and the like include plural referents unless the context clearly dictates otherwise. In addition, while reference may be made herein to quantitative measures, values, geometric relationships or the like, unless otherwise stated, any one or more if not all of these may be absolute or approximate to account for acceptable variations that may occur, such as those due to manufacturing or engineering tolerances or the like.

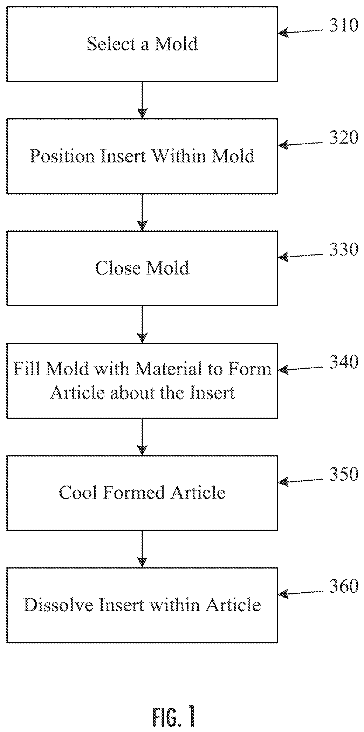

Referring now to FIGS. 1-4, a method of molding a product is disclosed in accordance with an embodiment of the present disclosure is referred to generally as method 400. The method 400 includes selecting or providing a mold 10 having a void 20 that defines an outer surface of a product or article to be molded therein (Step 310). The mold 10 includes one or more inflow channels 30 that extend from an outer surface of the mold to be in communication with the void 20. The mold 10 may include one or more outflow channels 40 that allow for air and/or excess material to exit the void 20 during filling of the mold 20.

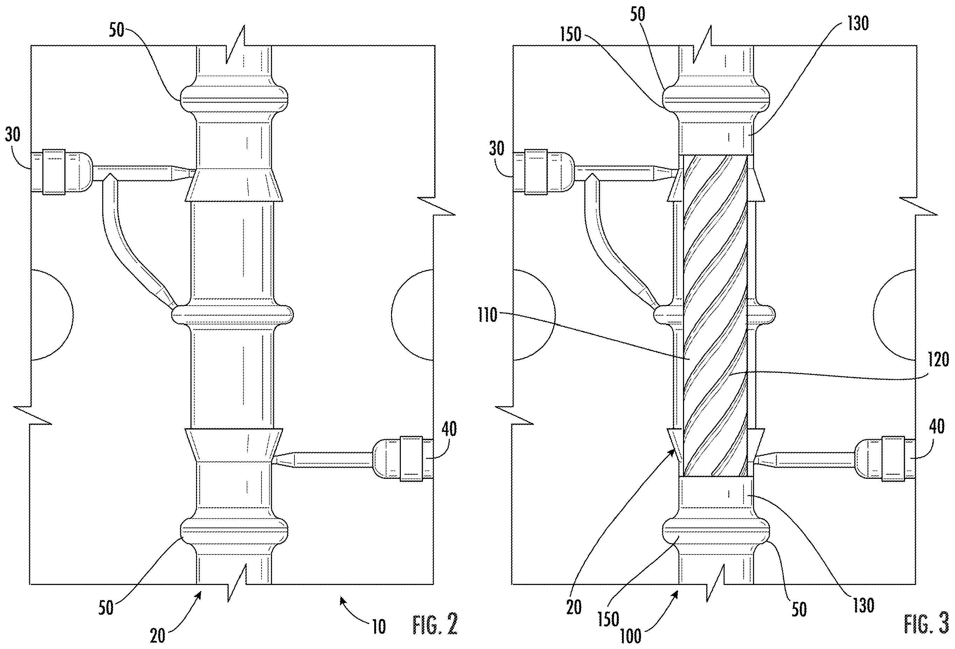

With particular reference to FIG. 3, the method 300 may include positioning an insert 100 within the void 20 (Step 320). The insert 100 having an outer surface 110 that defines internal surfaces of a product to be molded. For example, the insert 100 may include grooves 120 that represent ribs to be formed in a molded product. In some embodiments, the outer surface 110 of the insert 100 may include projections or ribs (not shown) that define indents or grooves in the inner surface of the product to be molded.

The insert 100 may also include end portions 130 that plug or seal portions of the void 20. The end portions 130 may include locator features such as locator rings 150 for positioning the insert 100 within the void 20. The void 20 may include retaining features such as retaining rings 50 that are sized and dimensioned to compliment the locator rings 150 to position the insert 100 within the void 20. The locator rings 150 and/or retaining rings 50 may include clocking features and/or orientation features to position the insert 100 within the void 20. The clocking features may align or rotatably orient the insert 100 within the void 20. The orientation features may orient the insert 100 within the void 20. For example, one locator ring 150 may be larger than another locator ring 150 and the retaining rings 50 of the voids 20 may be similarly sized such that the insert 100 can only be received in the void 20 in one orientation.

When the insert 100 is positioned within the void 20 of the mold 10, the mold 10 is closed, e.g., a second side of the mold 10 is secured to the first side of the mold to close the mold (Step 330). With the mold 10 closed, material is flowed into the void 20 through the inflow channels 30 (Step 340). The material flowed into the void 20 may fill the void and exit the mold 10 through the outflow channels 40. Material flowing out of the outflow channels 40 may be indicative of the void 20 being full. The material may be injected into the mold 10 such that the material flows within and through the void 20. The material may be selected from thermoplastic polymers such as polyolefins, thermoplastic elastomers (TPE), polycarbonates (PC), or polyethylene terephthalates (PET), or thermoset polymers such as silicones, polyurethanes, polyureas, or flouroelastomers. The material may be a combination of one or more thermoplastic polymers or one or more thermoset polymers.

When the void 20 is full, the material is allowed to cool within the mold 10 (Step 350). In certain embodiments, fluid may be flowed through the insert 100 to cool the material within void 20. For example, the insert 100 may include flow channels 160 that extend through the insert 100 such that a cooling fluid may be flowed through the insert 100.

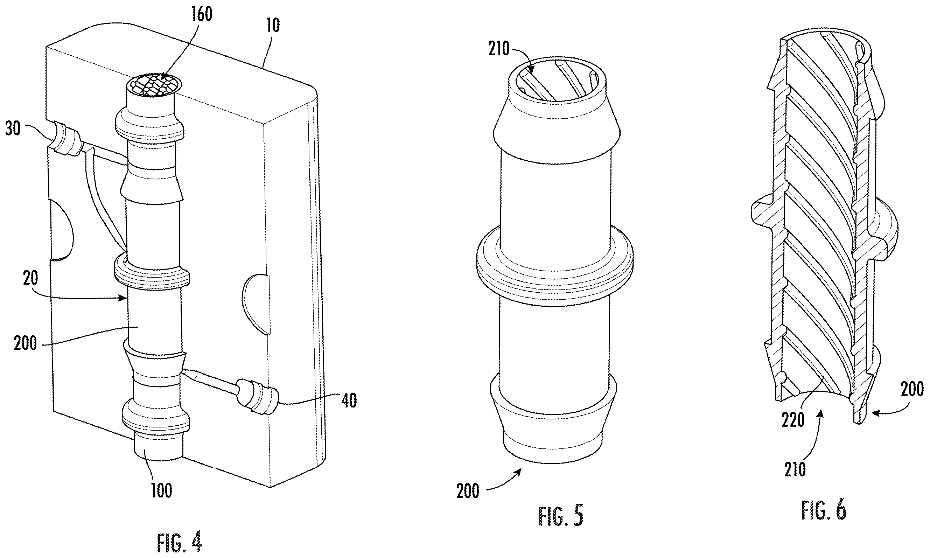

Referring now to FIG. 4, when the material within the void 20 is cooled, the mold 10 is opened to provide access to the product 200. The product 200 is formed over the insert 100 with the insert 100 defining an internal cavity and/or internal features of the product 200. The product 200 can be considered to be an overmold of the insert 100. When the mold 10 is opened, the insert 100 with the product 200 can be removed from the void 20 of the mold 10. In certain embodiments, the mold 10 may be reused with a new insert to produce another product 200.

With the insert 100 and the product 200 removed from the mold 10, the insert 100 is dissolved or disintegrated such that the insert 100 is removed from an internal cavity 210 of the product 200 (Step 360). Dissolving or disintegrating the insert 100 may include disposing the insert 100 and the product 200 in a liquid bath that dissolves or disintegrates the material of the insert 100 without affecting the material of the product 200. In some embodiments, dissolving or disintegrating the insert 100 may include flowing a liquid through the flow channels 160 of the insert 100 such that the liquid dissolves or disintegrates the insert 100. In certain embodiments, the insert 100 may be dissolved before the product 200 is removed from the mold. In particular embodiments, the insert 100 may be dissolved by the cooling fluid being flowed through the insert 100.

As detailed below, the insert 100 may include flow channels 160 or an internal lattice structure 170 that increases a surface area of the insert 100. The increased surface area of the insert 100 may reduce a time required to dissolve or disintegrate the insert 100. For example, an insert without flow channels 150 or an internal lattice structure 170 may require 24 hours or more to dissolve or disintegrate and a similar insert with flow channels 150 or the internal lattice structure 170 may dissolve or disintegrate in a similar bath in less than an hour. The flow channels 150 or the internal lattice structure 170 may be topology optimized to maximize flow and strength of the insert 100. In some embodiments, the flow channels 150 or the internal lattice structure 170 may be optimized to create turbulent flow within the insert 100 to increase a rate of disintegration of the insert 100. In addition, the use of flow channels 150 or internal lattice structures 170 may reduce material requirements for an insert which may reduce cost, reduce a product time, and reduce an amount of liquid required to dissolve the insert 100.

With reference to FIGS. 5 and 6, when the insert 100 is removed from the cavity 210 of the product 200, the final form of the product is revealed. Specifically, cavity 210 is formed with the internal features 220 extending into the cavity 210. The use of a dissolvable insert, e.g., insert 100, also for the formation of internal features that could not be formed with non-dissolvable inserts.

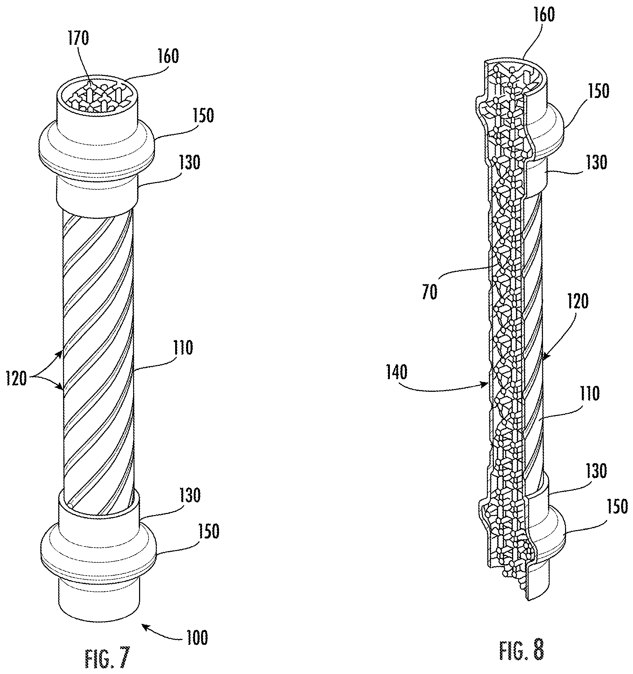

Referring to FIGS. 7 and 8, a dissolvable insert 100 for a mold is provided in accordance with an embodiment of the present disclosure. The insert 100 is configured to be inserted in a mold as detailed above to define internal cavities or features of a molded product. The insert 100 includes an outer surface 110 that is configured to support an inner surface of a molded product, e.g., product 200. The outer surface 110 may include indentations or grooves 120 that define protrusions or ribs in the inner surface of the molded product. Additionally or alternatively, the outer surface 110 may include protrusions or ribs that define indentations or grooves in the inside surface of the molded product. It will be appreciated that the outer surface 110 of the insert 100 is a negative of the inner surface of the molded product, e.g., molded product 200.

The insert 100 includes end portions 130 that are configured to support the insert 100 in a mold, e.g., mold 10. The end portions 130 may include on or more locating features such as locating rings 150 that position and support the insert 100 in the mold. The locating rings 150 may be sized the same or different from one another. When the locating rings 150 are sized different from one another, the locating rings 150 may act as orientating features that require the insert 100 to be receive in the mold in a specific orientation. The insert 100 may also include one or more clocking features that interact with the mold to orient or rotatably orient the insert 100 within the mold.

With particular reference to FIG. 8, the insert 100 includes a porous core 140. The porous core 140 is enclosed within the insert 100 such that when the insert 100 is received within a mold, e.g., mold 10, the porous core 140 is sealed relative to a void of the mold such that a material that is flowed into the mold to form a product is prevented from flowing into the porous core 140. The outer surface 110 of insert 100 may act as a barrier to prevent material flowed into the mold from flowing into the porous core 140.

The porous core 140 may include a lattice structure 170 that supports the outer surface 110 of the insert 100 such that the outer surface 110 and the insert 100 as a whole is substantially rigid. The lattice structure 170 forms an open cell structure and is configured to be provide structural support for the outer surface 110 and the insert 100 as a whole. The lattice structure 170 is formed by a plurality of members or arms that form an open-mesh frame. The lattice structure 170 defines a plurality of openings or voids between adjacent arms throughout. The arms may be cylindrical with a circular cross-section or may have a triangular, rectangular, pentagonal, hexagonal, or other polygonal cross-section. The arms may from an open cubic frame, an open pyramidal frame, or other open frame. The voids are sized to allow fluid to flow through the lattice structure 170. The lattice structure 170 may be formed of additive manufacturing processes, e.g., three-dimensional printing.

The lattice structure 170 may define flow channels 160 that extend through the porous core 140. The flow channels 160 may disperse a fluid through the porous core 140. In some embodiments, the flow of fluid through the flow channels 160 may cool a material about the outer surface 110. In certain embodiments, the flow channels may flow a fluid through the porous core 140 to reduce a dissolving or disintegration time of the insert 100.

The entire insert 100 is formed of a dissolvable resin such that after a product is molded over the insert 100, the entire insert 100 can be dissolved from within the product leaving the internal cavities or features defined by the outer surface 110 of the insert 100. The insert 100 may be formed of a water soluble resin such that the insert 100 and product may be placed in a water bath to dissolve the insert 100. Examples of suitable materials for the insert 100 include, but are not limited to, polyacrylic acid (PAA), polylactic acid (PLA), polyethylene glycol (PEG), acrylic blends, and combinations thereof. In certain embodiments, water may be flowed through the insert 100 to dissolve the insert 100. In particular embodiments, the material of the insert 100 may be formed of a material soluble with another fluid such that the other fluid is flowed through the insert 100 to dissolve the insert 100. It will be appreciated that the fluid used to dissolve the insert 100 should be no reactive with the material forming the product 200 such that the fluid dissolves the insert 100 without reacting with the product 200.

Forming the porous core 140 with a lattice structure 170 may reduce an amount of material required to form the insert 100. Reducing the material required to form the insert 100 may reduce an amount of time to dissolve the insert 100.

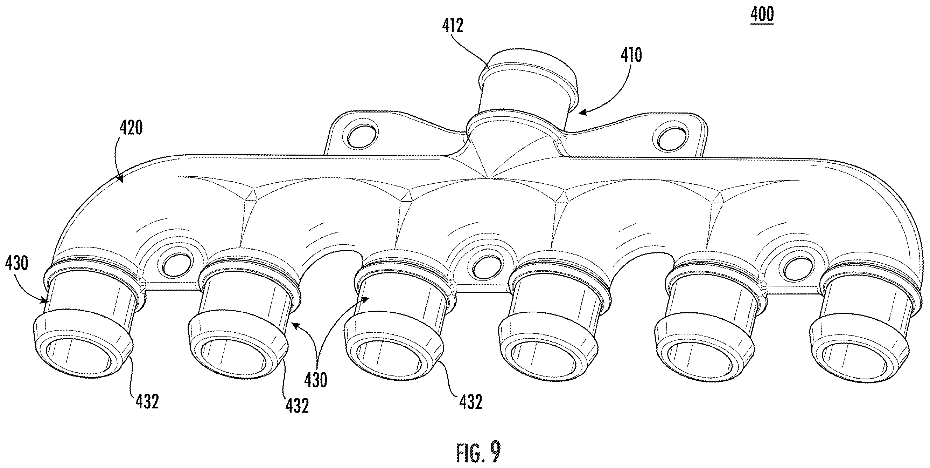

Referring now to FIG. 9, a fluid handling component is provided in accordance with an embodiment of the present disclosure and is referred to generally as fluid connector 400. The fluid connector 400 includes an input connector 410, a manifold 420, and a plurality of output connectors 430. The input connectors 410 and the output connectors 430 may include barbs 412, 432 to secure fluid conduits to the respective input connector 410 or output connector 430 of the fluid connector 400.

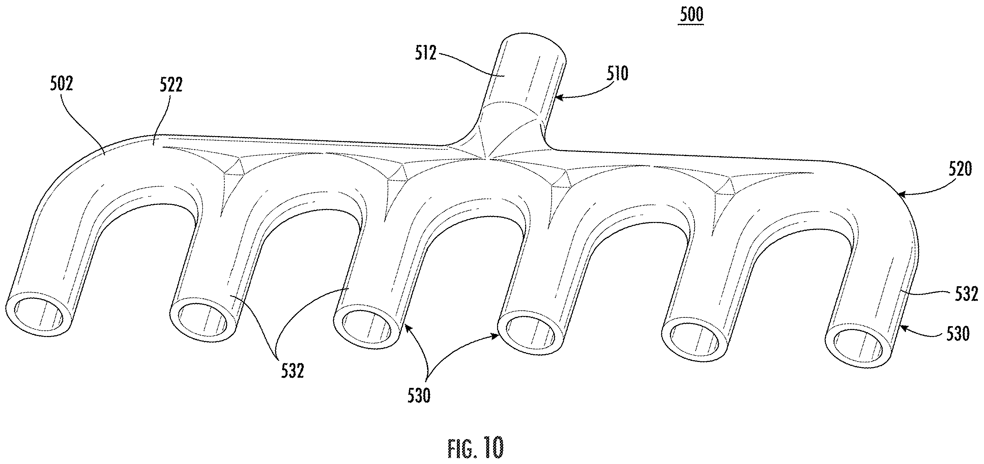

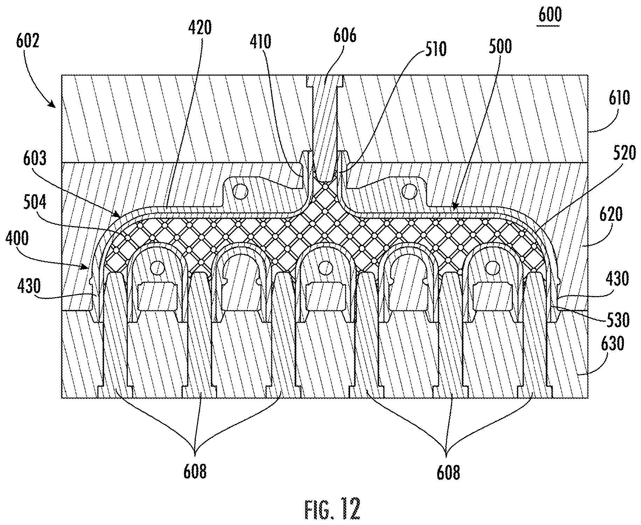

With additional reference to FIG. 10, an insert 500 is provided in accordance with an embodiment of the present disclosure which includes an input section 510, a manifold section 520, and output sections 530. As detailed below, the insert 500 is configured to form the inside surfaces and features of the fluid connector 400 during a molding process; e.g., method 300 detailed above. The insert 500 includes an internal lattice structure 504 (FIG. 12) to support an outer surface or skin 502 of the insert 500. The outer surface 502 may be formed of outer surfaces of the input section 510, the manifold section 520, and the output section 530 as detailed below.

During a molding process, the input section 510 includes an outer surface 512 that is positioned within a mold to define an inner surface and internal features of the input connector 410. The manifold section 520 includes an outer surface 522 that is positioned within a mold to define an inner surface and internal features of the manifold 420. The output section 530 includes an outer surface 532 that is positioned within a mold to define an inner surface and internal features of the output connector 430. The sections 510, 520, 530 of the insert 500 may be monolithically formed as shown or may be formed of separate pieces that are secured separately within the mold. The entire insert 500 may be formed using additive manufacturing techniques, e.g., three-dimensional printing, such that the insert 500 is monolithically formed. The insert 500 may be formed of a dissolvable resin such that a fluid, e.g., water, may flow through the insert 500 to dissolve the insert.

Within the outer skin 502 of the insert 500 is the lattice structure 504 that supports the outer skin 502. The lattice structure 504 has a plurality of voids and may form one or more fluid channels flowing through the lattice structure 504. The lattice structure 504 reduces an amount of material necessary to form the insert 500. Reducing the amount of material may reduce an amount of time to dissolve the insert 500 from within the fluid connector 400 after the fluid connector is formed on the outer skin 502 of the insert 500. In some embodiments, the lattice structure 504 may promote turbulent flow within the insert 500 to reduce an amount of time to dissolve the insert 500. In certain embodiments, fluid channels within the lattice structure 504 may promote the flow of fluid to particular portions of the insert 500 to reduce an amount of time to dissolve the insert 500.

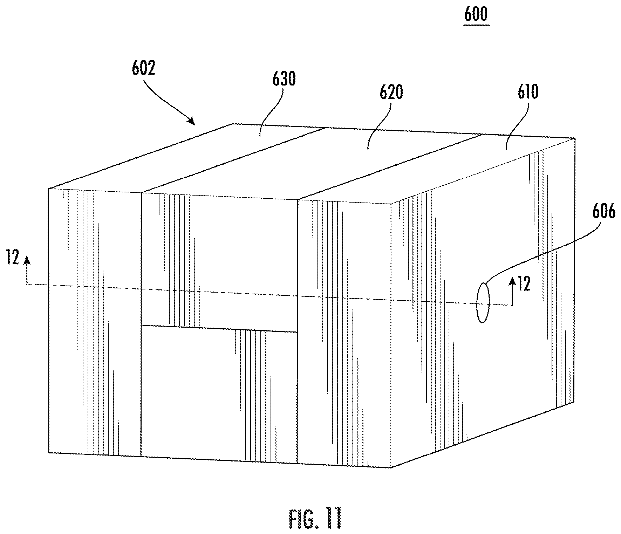

Referring now to FIGS. 11 and 12, a mold assembly 600 is provided in accordance within an embodiment of the present disclosure. The mold assembly 600 includes a mold 602, the fluid connector 400, the insert 500, and core pins 606, 608. The mold 602 defines the outer surface of the fluid connector 400 and may be formed of one or more parts. As shown, the mold 602 has an input part 610, a manifold part 620, and an output part 630. The parts 610, 620, 630 are joined together to form the mold 602 such that a cavity 603 of the mold 602 defines the outer surface of the fluid connector 400. Specifically, the input part 610 forms the outer surface of the input connector 410, the manifold part 620 forms the outer surface of the manifold 420, and the output part 630 forms the outer surface of the output connector 430. As shown, the input part 610 and the output part 630 are monolithically formed and the manifold part 620 is formed of two sections. In some embodiments, each part of the mold 602 may be formed of one or more sections that are joined together to form the respective part to define the cavity 603. In certain embodiments, a mold 602 may have a single part, two parts, or more than three parts that are joined together to form the mold 602 and define the cavity 603 thereof.

With specific reference to FIG. 12, the mold assembly 600 includes core pins 606, 608. The core pins 606, 608 are received within the cavity 603 of the mold 602 to seal the cavity 603 and to position the insert 500 within the cavity 603. As shown, the mold assembly 600 includes a single input core pin 606 that is received in the input part 610 of the mold 602 and engages the input section 510 of the insert 500. The engagement between the input core pin 606 and the input section 510 positions, e.g., coaxially aligns, the input section 510 with the cavity 603 such that a gap between the input section 510 and the input part 610 defines a space to receive material to form the input connector 410 of the fluid connector 400. In some embodiments, a portion of the input core pin 606 may form a portion of inside surface of the input connector 410. Similarly, the output core pins 608 may be received in the output part 630 of the mold 602 to engage and position the output section 530 of the insert 500 within the cavity 603 of the mold 602. As shown, the mold assembly 600 includes an output core pin 608 for each of the output connectors 430 of the fluid connector 400. Each of the output core pins 608 seals a portion of the cavity 603 and engages the output section 530 to position the insert 500 within the cavity 603 to form a gap or a space between the output section 530 and the output part 630 of the mold 602 that defines the output connector 430 of the fluid connector 400. In addition, engagement between the input core pin 606 and the output core pins 608 positions the manifold section 520 of the insert 500 within the manifold part 630 of the mold 602 to form a gap or a space therebetween that defines the manifold 430 of the fluid connector 400. In some embodiments, a portion of the output core pins 602 defines a portion of the output connector 430. While not explicitly shown, the mold 602 may include one or more input channels, e.g., inflow channel 30 (FIG. 3), and may include one or more outflow channels, e.g., outflow channel 40 (FIG. 3), to facilitate the flow of material into the cavity 603 of the mold 602 form the fluid connector 400.

The description above of a mold assembly to form a fluid handling component is described with respect to the mold assembly 600 to form the fluid connector 400 with the mold 602, the insert 500, and the core pins 606, 608 it will be appreciated that other fluid components and components in general may be injection molded using similar components and methods. Specifically, components that were not able to be formed by injection molding because of internal features or cavities can be formed using similar components including one or more inserts that are dissolvable after the component is molded thereabout. Forming the inserts of a porous dissolvable core, e.g., an insert with an internal lattice structure, allows for less material and/or a reduction in the time required to dissolve the insert. It will be appreciated that each insert 500 is a single use component that is dissolved away after a single use. In some embodiments, the entire mold 602, parts of the mold 602, or the core pins 606, 608 may be single use or reusable.

While several embodiments of the disclosure have been shown in the drawings, it is not intended that the disclosure be limited thereto, as it is intended that the disclosure be as broad in scope as the art will allow and that the specification be read likewise. Therefore, the above description should not be construed as limiting, but merely as exemplifications of particular embodiments. Those skilled in the art will envision other modifications within the scope of the claims appended hereto.

## Claims

1. A method of molding an article (200), the method comprising:
positioning a dissolvable insert (100) within a mould (10), the dissolvable insert comprising a porous core (140) enclosed and sealed from a mold void (20) by an outer surface (110) of the dissolvable insert, the outer surface and the porous core are monolithically formed with each other;
filling the mold with material to form an article within the mold and about the dissolvable insert such that the dissolvable insert forms internal features (220) of the article; and
at least partially dissolving the dissolvable insert from within the article.

2. The method according to claim 1, wherein at least partially dissolving the dissolvable insert from within the article comprises placing the article, including the dissolvable insert, in a water bath.

3. The method according to claim 1 or 2, wherein at least partially dissolving the dissolvable insert from within the article comprises flowing fluid through the porous core of the dissolvable insert, preferably wherein flowing fluid through the porous core includes flowing fluid through channels formed through the dissolvable insert.

4. The method according to any one of the previous claims, further comprising forming the dissolvable insert via additive manufacturing techniques, preferably wherein forming the dissolvable insert comprises forming the porous core having a lattice structure to support an outer surface of the dissolvable insert, the outer surface forming internal features of the article.

5. The method according to any one of the previous claims, further comprising forming the dissolvable insert of a dissolvable resin, preferably wherein forming the dissolvable insert of a dissolvable resin includes the dissolvable resin comprising polyacrylic acid (PAA), polylactic acid (PLA), polyethylene glycol (PEG), acrylic blends, or combinations thereof.

6. The method according to any one of the previous claims, further comprising cooling the article within the mold by flowing cooling media through a flow channel defined through the dissolvable insert, preferably wherein flowing fluid through a flow channel dissolves the dissolvable insert and cools the article about the dissolvable insert.

7. The method according to any one of the previous claims, wherein filling the mold with material comprises injecting the material into the mold.

8. The method according to any one of the previous claims, wherein filling the mold with material comprises the formed article being a fluid handling component having a body and the at least one internal feature formed by the dissolvable insert defined within the body.

9. The method according to any one of the previous claims, wherein filling the mold with material comprises filling the mold with a thermoplastic polymer or a thermoset polymer, preferably wherein filling the mold comprises filling the mold with polyolefin, thermoplastic elastomer (TPE), polycarbonate (PC), polyethylene terephthalate (PET), silicones, polyurethanes, polyureas, flouroelastomers, or combinations thereof.

10. A dissolvable insert for forming internal features of a molded article, the dissolvable insert comprising:
an outer surface configured to form an internal feature of a molded article; and
a porous core within the outer surface configured to support the outer surface such that the outer surface is rigid, the outer surface and the porous core formed of a dissolvable resin configured to be dissolved after the molded article is formed about the outer surface, the outer surface and the porous core monolithically formed with each other, the outer surface enclosing and sealing the porous core from a mold void when the dissolvable insert is inserted into a mold.

11. The dissolvable insert according to claim 10, wherein the outer surface is a barrier to prevent material flowing through a mold from entering the porous core.

12. The dissolvable insert according to claim 10 or claim 11, wherein the porous core comprises a lattice structure.

13. The dissolvable insert according to claim 12, wherein the lattice structure comprises an open cell structure configured to provide structural support for the outer surface; and/or wherein the lattice structure forms an open-mesh frame defining a plurality of voids.

14. The dissolvable insert according to any one of claims 10 to 13, further comprising a flow channel defined through the porous core configured to allow fluid to flow through the porous core

15. The dissolvable insert according to any one of claims 10 to 14, wherein the dissolvable resin comprises polyacrylic acid (PAA), polylactic acid (PLA), polyethylene glycol (PEG), acrylic blends, or combinations thereof.

## Patentansprüche

1. Verfahren zum Formen eines Artikels (200), wobei das Verfahren umfasst:
Positionieren eines auflösbaren Einsatzes (100) in einer Form (10), wobei der auflösbare Einsatz einen porösen Kern (140) umfasst, der durch eine Außenfläche (110) des auflösbaren Einsatzes eingeschlossen und gegenüber einem Formhohlraum (20) abgedichtet ist, wobei die Außenfläche und der poröse Kern monolithisch miteinander ausgebildet sind;
Füllen der Form mit einem Material, um einen Artikel in der Form und um den auflösbaren Einsatz herum zu bilden, so dass der auflösbare Einsatz innere Merkmale (220) des Artikels bildet; und
zumindest teilweises Auflösen des auflösbaren Einsatzes aus dem Inneren des Artikels.

2. Verfahren nach Anspruch 1, wobei das zumindest teilweise Auflösen des auflösbaren Einsatzes aus dem Inneren des Artikels das Platzieren des Artikels, einschließlich des auflösbaren Einsatzes, in einem Wasserbad umfasst.

3. Verfahren nach Anspruch 1 oder 2, wobei das zumindest teilweise Auflösen des auflösbaren Einsatzes aus dem Inneren des Artikels das Strömenlassen eines Fluids durch den porösen Kern des auflösbaren Einsatzes umfasst, wobei vorzugsweise das Strömenlassen eines Fluids durch den porösen Kern das Strömenlassen eines Fluids durch Kanäle umfasst, die durch den auflösbaren Einsatz hindurch gebildet sind.

4. Verfahren nach einem der vorhergehenden Ansprüche, ferner umfassend das Ausbilden des auflösbaren Einsatzes mittels additiver Fertigungstechniken, wobei vorzugsweise das Ausbilden des auflösbaren Einsatzes das Ausbilden des porösen Kerns mit einer Gitterstruktur umfasst, um eine Außenfläche des auflösbaren Einsatzes zu stützen, wobei die Außenfläche innere Merkmale des Artikels bildet.

5. Verfahren nach einem der vorhergehenden Ansprüche, ferner umfassend das Ausbilden des auflösbaren Einsatzes aus einem auflösbaren Harz, wobei vorzugsweise das Ausbilden des auflösbaren Einsatzes aus einem auflösbaren Harz umfasst, dass das auflösbare Harz Polyacrylsäure (PAA), Polymilchsäure (PLA), Polyethylenglykol (PEG), Acrylmischungen oder Kombinationen davon umfasst.

6. Verfahren nach einem der vorhergehenden Ansprüche, ferner umfassend das Kühlen des Artikels in der Form durch Strömenlassen eines Kühlmediums durch einen Strömungskanal, der durch den auflösbaren Einsatz hindurch definiert ist, wobei vorzugsweise das Strömenlassen eines Fluids durch einen Strömungskanal den auflösbaren Einsatz auflöst und den Artikel um den auflösbaren Einsatz herum kühlt.

7. Verfahren nach einem der vorhergehenden Ansprüche, wobei das Füllen der Form mit einem Material das Einspritzen des Materials in die Form umfasst.

8. Verfahren nach einem der vorhergehenden Ansprüche, wobei das Füllen der Form mit einem Material umfasst, dass der geformte Artikel eine Fluidhandhabungskomponente ist, die einen Körper aufweist, und das mindestens eine innere Merkmal, das durch den auflösbaren Einsatz gebildet ist, innerhalb des Körpers definiert ist.

9. Verfahren nach einem der vorhergehenden Ansprüche, wobei das Füllen der Form mit einem Material das Füllen der Form mit einem thermoplastischen Polymer oder einem duroplastischen Polymer umfasst, wobei vorzugsweise das Füllen der Form das Füllen der Form mit einem Polyolefin, einem thermoplastischen Elastomer (TPE), einem Polycarbonat (PC), einem Polyethylenterephthalat (PET), Silikonen, Polyurethanen, Polyharnstoffen, Fluorelastomeren oder Kombinationen davon umfasst.

10. Auflösbarer Einsatz zum Bilden innerer Merkmale eines geformten Artikels, wobei der auflösbare Einsatz umfasst:
eine Außenfläche, die dazu konfiguriert ist, ein inneres Merkmal eines geformten Artikels zu bilden; und
einen porösen Kern innerhalb der Außenfläche, der dazu konfiguriert ist, die Außenfläche derart zu stützen, dass die Außenfläche starr ist, wobei die Außenfläche und der poröse Kern aus einem auflösbaren Harz gebildet sind, das dazu konfiguriert ist, aufgelöst zu werden, nachdem der geformte Artikel um die Außenfläche herum gebildet ist, wobei die Außenfläche und der poröse Kern monolithisch miteinander ausgebildet sind, wobei die Außenfläche den porösen Kern gegenüber einem Formhohlraum einschließt und abdichtet, wenn der auflösbare Einsatz in eine Form eingesetzt ist.

11. Auflösbarer Einsatz nach Anspruch 10, wobei die Außenfläche eine Barriere ist, um zu verhindern, dass ein durch eine Form strömendes Material in den porösen Kern eintritt.

12. Auflösbarer Einsatz nach Anspruch 10 oder Anspruch 11, wobei der poröse Kern eine Gitterstruktur umfasst.

13. Auflösbarer Einsatz nach Anspruch 12, wobei die Gitterstruktur eine offenzellige Struktur umfasst, die dazu konfiguriert ist, eine strukturelle Abstützung für die Außenfläche bereitzustellen; und/oder wobei die Gitterstruktur einen offenmaschigen Rahmen bildet, der eine Vielzahl von Hohlräumen definiert.

14. Auflösbarer Einsatz nach einem der Ansprüche 10 bis 13, ferner umfassend einen Strömungskanal, der durch den porösen Kern hindurch definiert ist und dazu konfiguriert ist, es einem Fluid zu ermöglichen, durch den porösen Kern zu strömen.

15. Auflösbarer Einsatz nach einem der Ansprüche 10 bis 14, wobei das auflösbare Harz Polyacrylsäure (PAA), Polymilchsäure (PLA), Polyethylenglykol (PEG), Acrylmischungen oder Kombinationen davon umfasst.

## Revendications

1. Procédé de moulage d'un article (200), le procédé comprenant :
le positionnement d'un insert soluble (100) dans un moule (10), l'insert soluble comprenant un noyau poreux (140) enfermé et isolé de manière étanche vis-à-vis d'une cavité de moule (20) par une surface externe (110) de l'insert soluble, la surface externe et le noyau poreux étant formés de manière monolithique l'un avec l'autre ;
le remplissage du moule avec un matériau pour former un article dans le moule et autour de l'insert soluble de telle sorte que l'insert soluble forme des caractéristiques internes (220) de l'article ; et
la dissolution au moins partielle de l'insert soluble depuis l'intérieur de l'article.

2. Procédé selon la revendication 1, dans lequel la dissolution au moins partielle de l'insert soluble depuis l'intérieur de l'article comprend le placement de l'article, y compris l'insert soluble, dans un bain d'eau.

3. Procédé selon la revendication 1 ou 2, dans lequel la dissolution au moins partielle de l'insert soluble depuis l'intérieur de l'article comprend l'écoulement d'un fluide à travers le noyau poreux de l'insert soluble, de préférence dans lequel l'écoulement d'un fluide à travers le noyau poreux comprend l'écoulement d'un fluide à travers des canaux formés à travers l'insert soluble.

4. Procédé selon l'une quelconque des revendications précédentes, comprenant en outre la formation de l'insert soluble par des techniques de fabrication additive, de préférence dans lequel la formation de l'insert soluble comprend la formation du noyau poreux présentant une structure en treillis pour supporter une surface externe de l'insert soluble, la surface externe formant des caractéristiques internes de l'article.

5. Procédé selon l'une quelconque des revendications précédentes, comprenant en outre la formation de l'insert soluble en une résine soluble, de préférence dans lequel la formation de l'insert soluble en une résine soluble comprend le fait que la résine soluble comprend de l'acide polyacrylique (PAA), de l'acide polylactique (PLA), du polyéthylène glycol (PEG), des mélanges acryliques, ou des combinaisons de ceux-ci.

6. Procédé selon l'une quelconque des revendications précédentes, comprenant en outre le refroidissement de l'article dans le moule par écoulement d'un milieu de refroidissement à travers un canal d'écoulement défini à travers l'insert soluble, de préférence dans lequel l'écoulement d'un fluide à travers un canal d'écoulement dissout l'insert soluble et refroidit l'article autour de l'insert soluble.

7. Procédé selon l'une quelconque des revendications précédentes, dans lequel le remplissage du moule avec un matériau comprend l'injection du matériau dans le moule.

8. Procédé selon l'une quelconque des revendications précédentes, dans lequel le remplissage du moule avec un matériau comprend le fait que l'article formé est un composant de manipulation de fluide présentant un corps et l'au moins une caractéristique interne formée par l'insert soluble définie dans le corps.

9. Procédé selon l'une quelconque des revendications précédentes, dans lequel le remplissage du moule avec un matériau comprend le remplissage du moule avec un polymère thermoplastique ou un polymère thermodurcissable, de préférence dans lequel le remplissage du moule comprend le remplissage du moule avec un polyoléfine, un élastomère thermoplastique (TPE), un polycarbonate (PC), un polyéthylène téréphtalate (PET), des silicones, des polyuréthanes, des polyurées, des fluoroélastomères, ou des combinaisons de ceux-ci.

10. Insert soluble pour former des caractéristiques internes d'un article moulé, l'insert soluble comprenant :
une surface externe configurée pour former une caractéristique interne d'un article moulé ; et
un noyau poreux à l'intérieur de la surface externe configuré pour supporter la surface externe de telle sorte que la surface externe soit rigide, la surface externe et le noyau poreux étant formés d'une résine soluble configurée pour être dissoute après que l'article moulé est formé autour de la surface externe, la surface externe et le noyau poreux étant formés de manière monolithique l'un avec l'autre, la surface externe enfermant et isolant de manière étanche le noyau poreux vis-à-vis d'une cavité de moule lorsque l'insert soluble est inséré dans un moule.

11. Insert soluble selon la revendication 10, dans lequel la surface externe est une barrière pour empêcher un matériau s'écoulant à travers un moule de pénétrer dans le noyau poreux.

12. Insert soluble selon la revendication 10 ou la revendication 11, dans lequel le noyau poreux comprend une structure en treillis.

13. Insert soluble selon la revendication 12, dans lequel la structure en treillis comprend une structure à cellules ouvertes configurée pour fournir un support structurel à la surface externe ; et/ou dans lequel la structure en treillis forme un cadre à mailles ouvertes définissant une pluralité de vides.

14. Insert soluble selon l'une quelconque des revendications 10 à 13, comprenant en outre un canal d'écoulement défini à travers le noyau poreux configuré pour permettre à un fluide de s'écouler à travers le noyau poreux.

15. Insert soluble selon l'une quelconque des revendications 10 à 14, dans lequel la résine soluble comprend de l'acide polyacrylique (PAA), de l'acide polylactique (PLA), du polyéthylène glycol (PEG), des mélanges acryliques, ou des combinaisons de ceux-ci.
